# EUROPÄISCHE PATENTSCHRIFT

(11) **EP 0 687 849 B1**
(45) Veröffentlichungstag und Bekanntmachung des Hinweises auf die Patenterteilung: **18.10.2000**
(21) Anmeldenummer: 95108887.1
(22) Anmeldetag: 09.06.1995
(51) Int. Cl.: F16L 57/00

(54) **Verfahren zur Verhinderung der raschen Rissausbreitung bei Kunststoffrohren und nach dem Verfahren hergestellte Kunststoffrohre**
Method of limiting fast crack propagation in plastic pipes and pipes obtained by such method
Procédé pour empêcher la propagation rapide des fissures dans les tubes en matière plastique et tubes obtenus selon ce procédé

(30) Priorität: 16.06.1994 CH 190494
(43) Veröffentlichungstag der Anmeldung: 20.12.1995
(73) Patentinhaber: EMPA Eidgenössische Materialprüfungs- und Forschungsanstalt, CH-8600 Dübendorf (CH)
(72) Erfinder: Flüeler, Peter, CH-8607 Aathal (CH)
(74) Vertreter: Troesch Scheidegger Werner AG

(56) Entgegenhaltungen:
- EP-A- 0 014 489
- EP-A- 0 178 248
- EP-A- 0 390 925
- FR-A- 2 385 030
- NL-A- 7 513 316

## Beschreibung

Die vorliegende Erfindung betrifft ein Verfahren zur Verhinderung der raschen Rissausbreitung bei Kunststoffrohren, sowie ein danach hergestelltes Kunststoffrohr mit Ausrüstung zur Verhinderung rascher Rissausbreitung.

Die Probleme der Rissbildung und insbesondere der raschen Rissausbreitung in Kunststoffrohren, insbesondere Druckrohren (Gas oder Flüssigkeit) sind bekannt, obwohl sich Kunststoffrohre dank ihrer hervorragenden Eigenschaften in allen Anwendungsgebieten durchgesetzt haben. Kunststoffrohre in Gas und Wasserleitungssystemen sind heute stark verbreitet, da sie nicht korrodieren, leicht sind und sich einfach verbinden und trennen lassen.

Im Hinblick auf statische Belastungen (Innendruck) werden die Rohre bezüglich Wandstärke ausreichend dimensioniert, womit dem statischen Bruchverhalten Rechnung getragen ist.

Dies ändert jedoch nichts daran, dass bei diesen Rohren unter bestimmten Bedingungen eine schnelle Rissausbreitung beobachtet wird (axial verlaufende Rissbildung), abhängig vom Innendruck, Temperatur, Rohrmaterial, Rohrdimensionen, Einbauzustand etc., wobei der auftretende Innendruck offenbar den Hauptparameter bildet.

Es werden heute Anstrengungen unternommen, um durch neue Materialien dem Problem zu begegnen (Veränderung der Molekularstruktur der Polymere und deren Mischung), ohne dass damit durchschlagende Erfolge erzielt worden wären.

Andererseits wurde festgestellt, dass für Kunststoffrohre bestimmte Wanddickengrenzen bestehen, die entweder Rissausbreitung oder Rissstopp bewirken können. Es scheint, dass für ein Rohr mit einer unterhalb des Grenzwertes liegenden Wanddicke ein Riss zum Stehen kommt, nicht jedoch bei grösserer Wanddicke. Aufgabe der vorliegenden Erfindung ist es, dem bestehenden Problem der Rissausbreitung zu begegnen, ohne dabei die statischen Anforderungen negativ zu beeinflussen.

Diese Aufgabe wurde nun beim vorliegenden Verfahren unter Berücksichtigung physikalischer Erkenntnisse erfindungsgemäss dadurch gelöst, dass an vorbestimmten Längsabschnitten der Rohrwand im Hinblick auf das dynamische Verhalten die Wandstärke des für statische Anforderungen ausgelegten Rohres über eine vorbestimmte Länge reduziert wird und die derart in der Wandstärke reduzierten Rohrwandabschnitte im Hinblick auf die Wiederherstellung der statischen Festigkeit mit entsprechenden über den Rohrumfang erstreckenden Verstärkungen versehen werden, wobei letztere nicht oder nur teilweise in Verbund mit dem Grundmaterial des Rohres stehen.

Dank dem erfindungsgemässen Vorgehen wird somit durch Reduktion der wirksamen Wandstärke des Rohres das Problem der Rissausbreitung in den Griff bekommen und durch die an sich widersprüchliche gleichzeitige Verstärkung der geschwächten Stelle die geforderte statische Festigkeit wiederhergestellt. Vorzugsweise erfolgt die erfindungsgemässe Massnahme durch Einsetzen von separaten relativ kurzen Rohrstücken in das auszurüstende Rohr oder durch entsprechende Bearbeitung des bestehenden Rohres.

Ebenfalls Gegenstand der Erfindung bildet ein nach dem Verfahren zur Verhinderung rascher Rissausbreitung ausgerüstetes Kunststoffrohr, welches sich erfindungsgemäss dadurch auszeichnet, dass in vorbestimmten Längenabschnitten die für statische Anforderungen ausgelegte Wandstärke im Hinblick auf das dynamische Verhalten über bestimmte Strecken reduziert ist, das Rohr an den in der Wandstärke reduzierten Stellen jedoch im Hinblick auf statische Beanspruchungen mit einer sich über den Rohrumfang erstreckenden Verstärkung versehen ist.

Besondere Ausführungsformen des erfindungsgemässen Kunststoffrohres sind in den abhängigen Ansprüchen definiert.

Die Erfindung wird nachstehend anhand von in der Zeichnung dargestellten Ausführungsbeispielen noch etwas näher erläutert.
Es zeigt:
- Fig. 1: einen Längsschnitt durch ein Kunststoffrohr mit eingesetztem Rissstopper;
- Fig. 2: einen Ausschnitt aus einer Variante eines Rissstoppers für die Verwendung in einem Rohr nach Fig. 1;
- Fig. 3: eine weitere Ausführungsvariante mit mehrlagigem Rissstopper;
- Fig. 4: ein Kunststoffrohr mit als Radialscheibe ausgebildetem Rissstopper;
- Fig. 5: eine Variante der Ausführungsform nach Fig. 4 mit aus zwei Scheiben gebildetem Rissstopper.

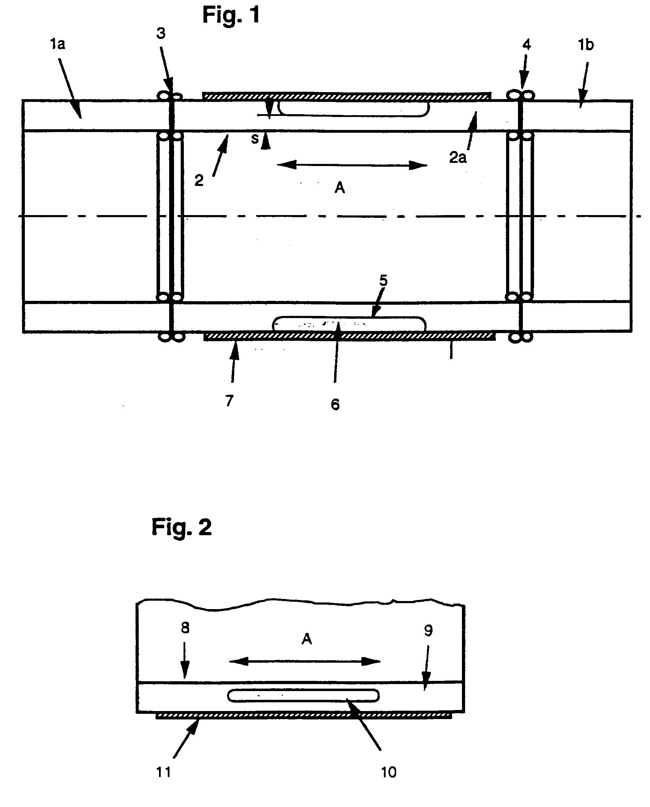

Wie ein Kunststoffrohr zur Verhinderung rascher Rissausbildung ausgerüstet werden kann, zeigt der Rohrlängsschnitt nach Fig. 1:

In ein durchgetrenntes Rohr 1a, 1b bzw. zwischen zwei Rohre 1a, 1b wird ein sog. Rissstopper 2 eingesetzt, wobei dessen Grundkörper 2a ebenfalls aus Kunststoff besteht (gleicher oder verschiedener Kunststoff wie Rohr 1a, 1b). Die Rohrteile 1a, 1b und der Grundkörper 2a werden an den Stossstellen 3,4 miteinander verschweisst und bilden damit einen homogenen Verbund.

Damit nun die Ausbreitung von eventuellen Längsrissen unterbunden werden kann, weist der Rissstopper 2 im Mittelabschnitt A eine reduzierte Wandstärke s auf, welche bezüglich Rissbildung die weiter oben angeführte Wirkung mit sich bringt. Die Länge des Abschnittes A ergibt sich aus dem gewählten Werkstoff und der zu verankernden Längskraft. Die Reduktion der Wandstärke erfolgte beim gezeigten Beispiel durch eine in der Aussenwand des Stoppers 2 umlaufende Nut 5, welche mit einem keinen vollen Verbund mit dem Rohrmaterial eingehenden Material, z.B. einem Muffenring 6 aus Elastomer gefüllt ist.

Da trotz des Muffenringes 6 das Rohr im Abschnitt A wegen der reduzierten Wandstärke geschwächt ist, ist der innere Teil des Rissstoppers 2 noch durch einen Ring bzw. eine Hülse 7 aus Stahl oder Kunststoff verstärkt und weist damit erneut eine statische Festigkeit entsprechend den nicht reduzierten Rohrteilen auf.

Mit der gezeigten Konstruktion kann die Rissausbreitung verhindert werden, ohne dass die statische Festigkeit des Rohres beeinträchtigt wird.

Fig. 2 der Zeichnung zeigt einen Ausschnitt aus einem Rissstopper 8, bei welchem die Wandstärke des Grundkörpers 9 durch einen eingeschlossenen Ring 10 aus gleichem oder unterschiedlichen Material verringert ist. Auch bei dieser Variante ist ein Stützring 11 vorgesehen.

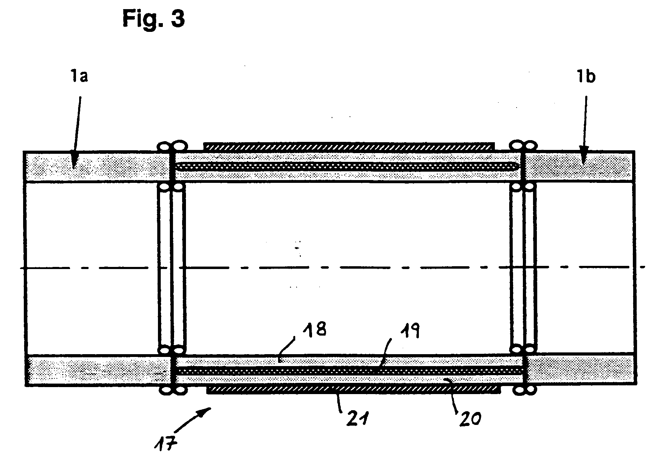

Eine weitere Variante zeigt der Rohrlängsschnitt nach Fig. 3. Das gegen Rissausbreitung ausgerüstete Rohr 1a, 1b ist auch hier mit einem Rissstopper 17 versehen, welcher aus drei separaten Lagen 18,19,20 von Kunststoff aufgebaut ist. Die Lagen weisen höchstens einen reduzierten Verbund untereinander auf, so dass auch hier eine bezüglich Rissausbreitung reduzierte Wandstärke besteht.

Auch dieser Rissstopper 17 wird durch einen Ring 21 aus Stahl oder z.B. GFK abgestützt. Eine Ausbreitung von Rissen durch den Rissstopper 17 hindurch ist wegen dessen reduzierter wirksamer Wandstärke nicht möglich.

Die Rissstopper können im Rohr selbstverständlich in gewünschten Abständen voneinander wiederholt vorgesehen werden, um so ein beliebig langes Rohr gegen Rissausbreitung zu schützen.

Selbstverständlich könnte das ganze Rohr mehrlagig beschaffen sein, damit Rissausbreitung verhindert wird.

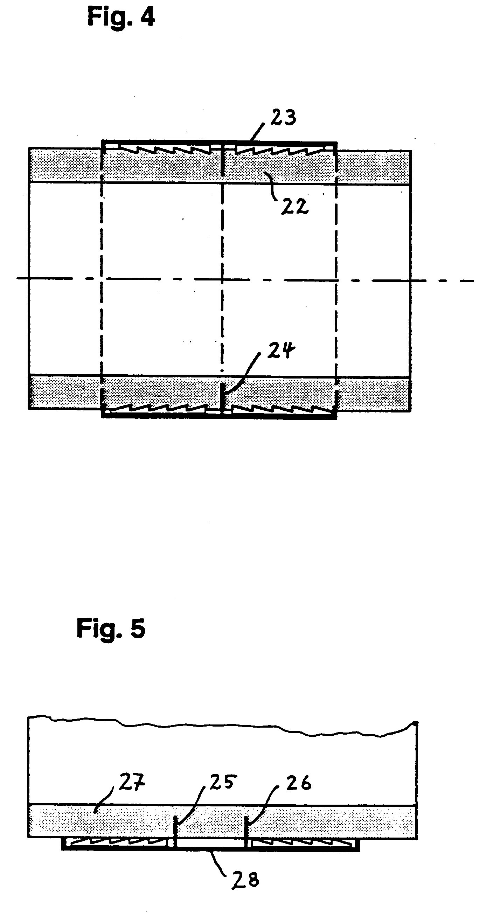

Fig. 4 zeigt eine besonders interessante Variante, bei welcher die Wandstärke des Rohres 22 von einer zuklappbaren Hülse 23 umgeben ist, von welchem radial nach innen ein Ring 24 absteht, welcher in die Rohrwand eindringt (z.B. durch Beheizung) und somit die Wandstärke des Rohres an dieser Stelle stark reduziert, was wiederum der Verhinderung der Rissausbildung dient.

Die auf das Rohr 22 aufklappbare und in der geschlossenen Stellung (nach dem Eindringen des Ringes 24) fixierbare Hülse 23 wird durch eine Art Innenverzahnung mit dem Rohr 22 zusätzlich längsverankert. Die Hülse 23 dient aber primär als Verstärkung der durch das Eindringen des Ringes 24 in die Rohrwand geschwächten Stelle des Rohres 22.

Fig. 5 zeigt eine Variante der Konstruktion nach Fig. 4, bei welcher zwei im Abstand voneinander auf der Innenseite einer Klapphülse 28 angeordnete Radialringe 25, 26 in die Wand des Rohres 27 eindringen.

Selbstverständlich können die Ausführungsvarianten nach Fig. 5 und 6 statt direkt in ein Kunststoffrohr in ein als Rissstopper dienendes Rohrstück eingesetzt werden. Ein solcher Rissstopper wurde auch wieder zwischen zwei Rohrenden einzuschweissen sein.

## Patentansprüche

1. Verfahren zur Verhinderung der raschen Rissausbreitung bei Kunststoffrohren, dadurch gekennzeichnet, dass an vorbestimmten Längsabschnitten der Rohrwand im Hinblick auf das dynamische Verhalten die Wandstärke des für statische Anforderungen ausgelegten Rohres über eine vorbestimmte Länge reduziert wird und die derart in der Wandstärke reduzierten Rohrwandabschnitte im Hinblick auf die Wiederherstellung der statischen Festigkeit mit entsprechenden über den Rohrumfang erstreckenden Verstärkungen versehen werden, wobei letztere nicht oder nur teilweise in Verbund mit dem Grundmaterial des Rohres stehen.

2. Verfahren nach Anspruch 1, dadurch gekennzeichnet, dass die in der Wandstärke reduzierten Rohrabschnitte als Rissstopper an vorbestimmten Stellen in das Rohr eingesetzt und mit letzterem verbunden werden.

3. Verfahren nach Anspruch 1, dadurch gekennzeichnet, dass die in der Wandstärke reduzierten Rohrabschnitte als Rissstopper an vorbestimmten Stellen in die Rohrwand eingearbeitet werden.

4. Kunststoffrohr mit Ausrüstung zur Verhinderung rascher Rissausbreitung, hergestellt nach dem Verfahren nach einem der Ansprüche 1 bis 3, dadurch gekennzeichnet, dass in vorbestimmten Längenabschnitten die für statische Anforderungen ausgelegte Wandstärke im Hinblick auf das dynamische Verhalten über bestimmte Strecken reduziert ist, das Rohr an den in der Wandstärke reduzierten Stellen jedoch im Hinblick auf statische Beanspruchungen mit einer sich über den Rohrumfang erstreckenden Verstärkung versehen ist.

5. Kunststoffrohr nach Anspruch 4, dadurch gekennzeichnet, dass die Reduktion der Rohrwandstärke aus einer über den Umfang des Rohres umlaufenden Ausnehmung besteht, welche mit einem Material ausgefüllt ist, das mit dem Rohrmaterial nicht oder nur teilweise verbunden ist.

6. Kunststoffrohr nach Anspruch 5, dadurch gekennzeichnet, dass sich die Ausnehmung auf der Aussenseite der Rohrwand befindet.

7. Kunststoffrohr nach Anspruch 5, dadurch gekennzeichnet, dass sich die Ausnehmung im Innern der Rohrwand befindet.

8. Kunststoffrohr nach einem der Ansprüche 5 - 7, dadurch gekennzeichnet, dass das Füllmaterial der Ausnehmung ein elastomeres Material ist.

9. Kunststoffrohr nach einem der Ansprüche 4 - 8, dadurch gekennzeichnet, dass die Verstärkung aus einer auf der Rohraussenseite angebrachten Hülse bzw. einem Ring besteht.

10. Kunststoffrohr nach Anspruch 9, dadurch gekennzeichnet, dass die Hülse bzw. der Ring aus Kunststoff oder Metall, insbesondere aus Stahl besteht.

11. Kunststoffrohr nach Anspruch 4, dadurch gekennzeichnet, dass das Rohr mindestens im Abschnitt reduzierter Wandstärke aus mehreren Materiallagen besteht, welche unter sich nicht oder nur teilweise verbunden sind.

12. Kunststoffrohr nach Anspruch 4, dadurch gekennzeichnet, dass die Reduktion der Wandstärke durch einen oder mehrere im Abstand voneinander angeordnete, in das Wandmaterial von aussen eindringende Ringe erfolgt.

13. Kunststoffrohr nach Anspruch 12, dadurch gekennzeichnet, dass die Ringe aus Metall sind und als radial von der Innenwand der Verstärkungshülse nach innen abstehende Teile ausgebildet sind, wobei die Hülse ein mehrteiliges zusammenklappbares Element ist.

14. Kunststoffrohr nach Anspruch 12 oder 13, dadurch gekennzeichnet, dass der Ring beheizbar ist.

15. Kunststoffrohr nach einem der Ansprüche 4 - 14, dadurch gekennzeichnet, dass der in der Wandstärke reduzierte Rohrabschnitt als Rohrteil vorbestimmter Länge ausgebildet und an vorbestimmten Stellen in das Rohr eingesetzt und mit diesem verbunden, z.B. verschweisst ist.

16. Kunststoffrohr nach Anspruch 15, dadurch gekennzeichnet, dass der genannte Rohrteil über aneinanderstossenden, nicht miteinander verbundenen Rohrabschnitten als Muffe angeordnet ist.

## Claims

1. A method of preventing a fast propagation of cracks at plastic tubes, characterised by reducing the wall thickness of the tube designated for static requirements along a predetermined length thereof at predetermined sections of the length of the tube wall in consideration of its dynamic behaviour and by providing the sections of the tube wall which in this manner have been reduced regarding the wall thickness in consideration of reinstating of the static strength with corresponding reinforcements extending over the circumference, which reinforcements are not at all or only partly interconnected with the base material of the tube.

2. The method of claim 1, wherein the sections of the tube which are reduced regarding the wall thickness are set into the tube at predetermined areas as crack stopping means and are interconnected with the tube.

3. The method of claim 1, wherein the sections of the tube which are reduced regarding the wall thickness are worked at predetermined areas into the wall of the tube.

4. A plastic tube equipped with means for preventing a fast propagation of cracks, prepared in accordance with the method of any of claims 1 - 3, in which the tube wall which is designated for static requirements is reduced in thickness along predetermined lengths in consideration of the dynamic behaviour, the tube having, however, at the areas which are reduced regarding the wall thickness, in consideration of static loadings a reinforcement extending over its circumference.

5. The plastic tube of claim 4, in which the reduction of the wall thickness of the tube consists of a recess extending around the circumference of the tube, which recess is filled by a material which is not at all or only partly interconnected with the material of the tube.

6. The plastic tube of claim 5, in which the recess is located at the outside of the wall of the tube.

7. The plastic tube of claim 5, in which the recess is located at the inner side of the wall of the tube.

8. The plastic tube of any of claims 5 - 7, in which the material with which the recess is filled is an elastomeric material.

9. The plastic tube of any of claims 4 - 8, in which the reinforcement consists of a sleeve or ring placed on the outer side of the tube.

10. The plastic tube of claim 9, in which the sleeve or ring consists of plastic or of a metal, specifically of steel.

11. The plastic tube of claim 4, in which the tube consists at least at the section of reduced wall thickness of a plurality of material layers which are not at all or only partly interconnected with each other.

12. The plastic tube of claim 4, in which the reduction of the wall thickness is achieved by one or a plurality of rings arranged at a distance from each other and penetrating from the outside into the material of the wall.

13. The plastic tube of claim 12, in which the rings are of metal and are designed as parts projecting radially from the inner wall of the reinforcing sleeve towards the inside, whereby the sleeve is designed as a multi-part foldable element.

14. The plastic tube of claim 12 or 13, in which the ring is heatable.

15. The plastic tube of any of claims 4 - 14, in which the section of the tube which is reduced regarding its wall thickness is designed as a tube part of a predetermined length which is set into the tube at predetermined locations and is connected, e.g. welded thereto.

16. The plastic tube of claim 15, in which said section of the tube is arranged as a sleeve over tube sections which abut each other but are not connected to each other.

## Revendications

1. Procédé pour empêcher la propagation rapide de fissures dans les tubes en matière plastique, caractérisé en ce que l'épaisseur de la paroi du tube dimensionnée pour les besoins statiques est réduite le long de secteurs de longueur prédéterminés sur des sections de longueur prédéterminées en vue du comportement dynamique et en ce que lesdites sections de longueur du tube réduites dans leur épaisseur de la paroi sont pourvues de renforcement appropriées s'étendant sur toute la circonférence pour rétablir la résistance statique, lesdits renforcements n'étant pas ou seulement partiellement liés avec le matériel de base du tube.

2. Procédé selon la revendication 1, caractérisé en ce que lesdites sections du tube à épaisseur de paroi réduite sont insérées à des emplacements prédéterminés dans le tube pour former des stoppeurs de fissures et sont liés avec le tube.

3. Procédé selon la revendication 1, caractérisé en ce que lesdites sections de tube à épaisseur de paroi réduite sont travaillées à des emplacements prédéterminés dans la paroi du tube pour former des stoppeurs de fissures.

4. Tube en matière plastique avec équipement pour empêcher la propagation rapide de fissures, préparée selon le procédé selon l'une des revendications 1 - 3, caractérisé en ce que l'épaisseur de la paroi dimensionnée pour des besoins statiques est réduite sur des sections prédéterminées en vue du comportement dynamique, le tube étant cependant, aux endroits avec une épaisseur de paroi réduite, muni d'un renforcement s'étendant sur toute la circonférence, pour rétablir sa résistance statique.

5. Tube en matière plastique selon la revendication 4, caractérisé en ce que la réduction de l'épaisseur de la paroi du tube consiste en un creux s'étendant sur toute la circonférence du tube, ce creux étant rempli d'un matériel qui n'est pas ou seulement partiellement lié avec le matériel de base du tube.

6. Tube en matière plastique selon la revendication 5, caractérisé en ce que ledit creux se trouve sur la face extérieur de la paroi du tube.

7. Tube en matière plastique selon la revendication 5, caractérisé en ce que ledit creux se trouve sur la face intérieure de la paroi du tube.

8. Tube en matière plastique selon l'une des revendications 5 - 7, caractérisé en ce que le matériel de remplissage du creux est un élastomère.

9. Tube en matière plastique selon l'une des revendications 4 - 8, caractérisé en ce que ledit renforcement consiste en une douille ou un anneau prévu sur la face extérieure du tube.

10. Tube en matière plastique selon la revendication 9, caractérisé en ce que la douille ou l'anneau est en matière plastique ou en métal, notamment en acier.

11. Tube en matière plastique selon la revendication 4, caractérisé en ce que le tube consiste au moins dans la section à épaisseur de paroi réduite de plusieurs couches qui entre elles ne sont pas ou seulement partiellement reliées.

12. Tube en matière plastique selon la revendication 4, caractérisé en ce que la réduction de l'épaisseur de la paroi est réalisée au moyens d'un ou de plusieurs anneaux espacés qui s'enfoncent dans le matériel de la paroi depuis l'extérieur.

13. Tube en matière plastique selon la revendication 12, caractérisé en ce que les anneaux sont en métal et sont formés par des parties s'étendant radiallement vers l'intérieur à partir de la face intérieure de la douille de renforcement, ladite douille étant un élément formé de plusieurs parties repliables.

14. Tube en matière plastique selon l'une des revendications 12 ou 13, caractérisé en ce que l'anneau est chauffable.

15. Tube en matière plastique selon l'une des revendications 4 - 14, caractérisé en ce que la section du tube à épaisseur de paroi réduite est formé par un élément tubulaire de longueur prédéterminée, placé à des endroits prédéterminés dans le tube et relié avec ce dernier, par exemple par soudage.

16. Tube en matière plastique selon la revendication 15, caractérisé en ce que ledit élément tubulaire est monté comme manchon sur des longueurs de tube adjacents mais non-reliés l'une à l'autre.
